# FASCICULE DE BREVET EUROPEEN

(11) **EP 3 529 559 B1**
(45) Date de publication et mention de la délivrance du brevet: **25.11.2020**
(21) Numéro de dépôt: 17801488.2
(22) Date de dépôt: 12.10.2017
(51) Int. Cl.: G01C 21/16, G06F 3/01, G06T 19/00, G02B 27/01, G01S 5/16

(54) **PROCEDE D'AIDE A LA LOCALISATION D'UN OBJECTIF ET DISPOSITIF D'OBSERVATION PERMETTANT LA MISE EN OEUVRE DE CE PROCEDE**
VERFAHREN ZUR UNTERSTÜTZUNG DER POSITION EINES ZIELES UND BEOBACHTUNGSVORRICHTUNG FÜR DIE UMSETZUNG DIESES VERFAHRENS
METHOD FOR ASSISTING THE LOCATION OF A TARGET AND OBSERVATION DEVICE ENABLING THE IMPLEMENTATION OF THIS METHOD

(30) Priorité: 24.10.2016 FR 1601535
(43) Date de publication de la demande: 28.08.2019
(73) Titulaire: NEXTER Systems, 42328 Roanne Cedex (FR)
(72) Inventeur: BRUNEAU, Philippe, 18023 Bourges (FR)
(74) Mandataire: Cabinet Chaillot
(86) Numéro de dépôt international: PCT/FR2017/052808
(87) Numéro de publication internationale: WO 2018/078236

(56) Documents cités:
- US-A1- 2007 276 590

## Description

Le domaine technique de l'invention est celui des procédés permettant d'aider à la localisation d'un objectif pour un utilisateur équipé d'un moyen d'observation.

On entend par moyen d'observation en particulier les dispositifs de visualisation optiques ou numériques permettant à un utilisateur d'observer une scène. Parmi de tels dispositifs on pourra citer les viseurs, les jumelles, les lunettes optiques, les systèmes à réalité augmentée équipant un casque ou des lunettes.

Il est déjà classique de superposer à la vision d'un objectif des informations incrustées apportant des informations sur l'objet observé.

Les brevets EP2942717 et EP1451652 montrent ainsi des dispositifs d'observation à réalité augmentée utilisés pour réaliser des tâches de maintenance avec ou sans l'aide d'un opérateur distant.

Généralement la localisation du moyen d'observation (lunettes ou casque) par rapport à la scène observée est réalisée en utilisant des marqueurs disposés sur les objets à analyser. Le brevet EP949513 décrit une telle technique.

Le brevet US2007/0276590 décrit également la mise en place sur le terrain de marqueurs particuliers qui transmettent leurs coordonnées à l'observateur.

Une difficulté se pose alors lorsque l'observateur évolue dans un environnement inconnu dans lequel aucun repère ne peut être positionné.

Il a été également proposé d'équiper l'utilisateur d'un dispositif d'observation formé par un casque portant des moyens d'observation de l'environnement et réalisant une analyse permanente de ce dernier afin d'assurer une évaluation des mouvements du casque par corrélation des images successives capturées. Le brevet US8831277 décrit un tel casque. La difficulté se situe alors au niveau des performances de calcul dans un environnement pouvant varier rapidement. Une autre difficulté se situe au niveau de la précision des localisations dans l'espace du casque qui peuvent être obtenues.

Dans un contexte militaire ou d'opérations de maintien de l'ordre, il est en effet nécessaire de localiser très précisément l'orientation du casque ou des lunettes afin de permettre le positionnement dynamique d'images ou de repères dans le moyen d'observation, par exemple lorsqu'il est nécessaire de positionner une cible à neutraliser.

Les angles de localisation doivent alors avoir une précision de l'ordre de quelques milliradians.

Ceci est difficile à assurer dans tous les cas à partir d'une analyse de l'environnement immédiat et sans repères fixes positionnés sur le terrain. Il devient alors nécessaire d'équiper le casque d'une plateforme inertielle pour pouvoir mesurer en permanence son orientation dans l'espace.

Cependant une telle technique est encombrante et coûteuse et ne peut être retenue.

C'est le but de l'invention que de proposer un procédé d'aide à la localisation d'objectif pour un utilisateur, procédé dans lequel la localisation est assurée d'une façon simple et rapide.

Le procédé selon l'invention trouve application dans un contexte militaire et il aide alors à la communication d'informations opérationnelles sur le champ de bataille entre différents opérateurs et entre les fantassins et l'équipage d'un véhicule. Le procédé selon l'invention trouve également application dans des contextes d'opérations de maintien de l'ordre pour lesquelles il peut être nécessaire de communiquer des informations opérationnelles à des opérateurs situés à distance d'un véhicule sur un terrain d'opérations.

Ainsi l'invention a pour objet un procédé d'aide à la localisation d'un objectif pour un premier utilisateur équipé d'un dispositif d'observation comprenant un moyen d'observation à réalité augmentée solidaire d'une platine support et couplé à un moyen de calcul et associé à des moyens de communication, procédé caractérisé en ce que, une plateforme de référence étant positionnée sur le terrain et ayant un repère d'orientation dans l'espace dit repère maître, et un premier repère d'orientation utilisateur dans l'espace dit premier repère utilisateur étant défini par conception du dispositif d'observation, et associé au dispositif d'observation du premier utilisateur, le procédé comprend les étapes suivantes :
- on transmet au premier utilisateur, à partir de la plateforme ou par un second utilisateur et via les moyens de communication les coordonnées de l'objectif dans le repère maître ;
- le premier utilisateur observe la plateforme de référence à partir d'au moins une caméra qui est solidaire de la platine portée par le premier utilisateur et qui supporte le moyen d'observation à réalité augmentée;
- on compare la géométrie de plateforme ainsi observée à un modèle numérique de la plateforme, qui a été mis dans une mémoire du moyen de calcul, pour en déduire l'orientation et la localisation du premier repère utilisateur par rapport au repère maître ;
- on calcule les coordonnées de l'objectif dans le premier repère utilisateur ;
- on affiche sur le moyen d'observation à réalité augmentée du premier utilisateur au moins un réticule virtuel permettant de localiser l'objectif.

Selon un mode particulier de réalisation, les coordonnées de l'objectif dans le repère maître pourront être transmises à partir de la plateforme qui est équipée d'au moins un moyen d'observation maître, couplé à un moyen de désignation d'objectif, moyens permettant de déterminer les coordonnées de l'objectif dans le repère maître.

Selon un autre mode de réalisation, les coordonnées de l'objectif dans le repère maître pourront être transmises par un second utilisateur qui sera équipé d'un dispositif d'observation couplé à un moyen de calcul et associé à des moyens de communication, le second utilisateur ayant des moyens lui permettant de désigner un objectif.

Avantageusement, le second utilisateur est équipé d'un dispositif d'observation comportant un moyen d'observation à réalité augmentée analogue à celui du premier utilisateur, un second repère d'orientation utilisateur dans l'espace dit second repère utilisateur étant défini par conception du dispositif d'observation, et qui est associé au dispositif d'observation du second utilisateur, procédé dans lequel :
- le second utilisateur détermine les coordonnées d'un objectif à désigner dans le second repère utilisateur ;
- le second utilisateur observe la plateforme de référence à partir d'au moins une caméra portée par le second utilisateur, caméra qui est solidaire de la platine portée par le second utilisateur et qui supporte le moyen d'observation à réalité augmentée du second utilisateur ;
- on compare la géométrie de la plateforme ainsi observée à un modèle numérique de la plateforme qui est mis dans une mémoire du moyen de calcul pour en déduire l'orientation et la localisation du second repère utilisateur par rapport au repère maître ;
- on calcule les coordonnées de l'objectif à désigner dans le repère maître ;
- le second utilisateur transmet au premier utilisateur les coordonnées de l'objectif dans le repère maître.

Selon un mode de réalisation, la plateforme est constituée par un véhicule.

Le modèle numérique de la plateforme pourra être un modèle d'au moins une partie de de la géométrie externe du véhicule.

Le modèle numérique de la plateforme pourra être ou pourra incorporer au moins une partie d'un modèle de la géométrie interne du véhicule.

L'invention a également pour objet un dispositif d'observation pour un premier utilisateur, dispositif comportant un moyen d'observation à réalité augmentée couplé à un moyen de calcul associé à des moyens de communication, dispositif permettant la mise en œuvre du procédé selon l'invention. Ce dispositif est caractérisé en ce qu'il comprend une platine qui porte, fixée d'une façon rigide, au moins une caméra permettant d'observer l'espace autour du premier utilisateur et d'acquérir des images de la plateforme, le moyen de calcul incorporant une mémoire dans laquelle est mis en place un modèle numérique de la plateforme et des algorithmes permettant de déterminer l'orientation et la localisation, par rapport à un repère maître associé à ladite plateforme, d'un premier repère d'orientation du dispositif d'observation de l'utilisateur dans l'espace, dit premier repère utilisateur, et de convertir les coordonnées d'une image ou d'un objectif à partir du repère maître dans le premier repère et inversement, le moyen d'observation à réalité augmentée comportant au moins un collimateur de projection et au moins une lame semi transparente qui sont solidaires de la platine, chaque collimateur pouvant afficher l'image sur une lame semi transparente, la platine constituant un support mécanique rigide permettant de fixer les positions et orientations angulaires relatives de la ou des caméras, du ou des collimateurs et de la ou des lames semi transparentes.

Avantageusement, le dispositif d'observation pourra comprendre deux lames semi transparentes associées chacune à un collimateur.

L'invention sera mieux comprise à la lecture de la description qui va suivre d'un mode particulier de réalisation, description faite en référence aux dessins annexés et dans lesquels :
- La figure 1 schématise la mise en œuvre de l'invention sur le terrain ;
- La figure 2 montre de façon plus précise un dispositif d'observation selon l'invention ;
- La figure 3 est une vue de dessus schématique du dispositif d'observation selon la figure 2.

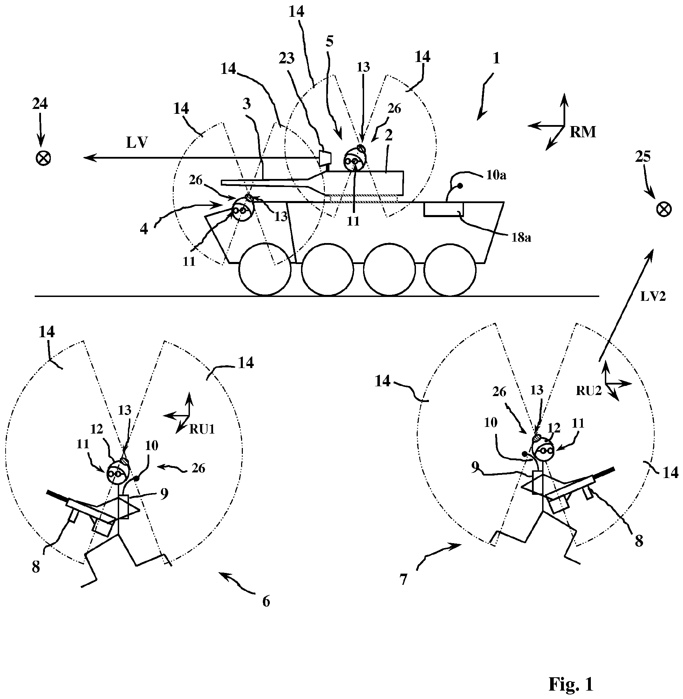

On a représenté à la figure 1 un théâtre d'opérations militaires (ou de maintien de l'ordre) dans lequel évolue un véhicule 1, qui est ici un véhicule blindé à roues équipé d'une tourelle 2 portant un système d'arme 3.

On a représenté sur la figure 1 le pilote 4 du véhicule qui a la tête sortie hors de l'habitacle ainsi qu'un autre occupant 5 du véhicule, tel que le chef de véhicule ou le tireur, qui a lui aussi la tête sortie hors de la tourelle 2. Deux fantassins armés 6 et 7 évoluent sur le terrain.

Chaque fantassin est équipé d'une arme individuelle 8 et il porte un boîtier 9 qui renferme un moyen de calcul portatif associé à des moyens de communication dont on a représenté schématiquement une antenne 10. Les moyens de communication permettent à chaque fantassin 6,7 d'échanger avec les autres fantassins ainsi qu'avec les occupants du véhicule 1.

De tels moyens de communication sont bien connus. Ils utilisent généralement les ondes hertziennes et associent les échanges de voix et de données.

Chaque fantassin est également équipé d'un dispositif d'observation 26 comportant un moyen d'observation à réalité augmentée 11 qui est schématisé ici sous la forme de lunettes à vision augmentée.

Ces moyens d'observation à réalité augmentée sont couplés aux moyens de calcul placés dans le boîtier 9 et ils permettent en particulier de faire apparaître, en superposition à la vision du terrain, des images ou des informations relatives à la mission en cours, informations qui sont envoyées par les autres fantassins ou par les occupants du véhicule.

Conformément à l'invention, le dispositif d'observation 26 comporte un moyen d'observation à réalité augmentée 11 qui est solidaire d'une platine support 12, platine qui porte également, fixée d'une façon rigide, au moins une caméra 13 permettant d'observer l'espace autour de l'utilisateur considéré.

Sur la figure 1 on a schématisé la platine support 12 par un casque porté par chaque utilisateur. La ou les caméras 13 sont fixées au sommet du casque.

La caméra ou le groupe de caméras est défini de façon à assurer un champ d'observation 14 de cette ou ces caméras 13 qui a une couverture angulaire qui est sensiblement de 360° autour de l'utilisateur. On pourra choisir des caméras grand champ (donc à objectif grand angle) mais on pourra aussi choisir des caméras ayant un angle d'objectif plus réduit, il faut alors augmenter le nombre de caméras pour assurer la couverture angulaire souhaitée (360°).

Pour des raisons technologiques, cette couverture de 360° pourra n'être effective qu'à une distance donnée de l'utilisateur (par exemple d'au moins un mètre). En particulier, lorsque l'utilisateur porte plusieurs caméras 13 réparties autour du casque, il y aura des zones aveugles mais uniquement à proximité de l'utilisateur, les champs des caméras se recoupant à distance pour assurer la couverture de 360°. Concrètement les champs sont choisis suffisamment larges pour qu'une caméra 13 assure toujours l'observation d'au moins une partie d'une plateforme de référence constituée ici par le véhicule 1 comme cela sera décrit par la suite.

Sur la figure 1, les secteurs angulaires 14 représentés sont une coupe de la couverture spatiale réelle qui a une forme sensiblement sphérique et couvre donc bien 360° autour de l'utilisateur. Les zones aveugles orientées vers le haut et vers le bas ne sont pas gênantes opérationnellement. On remarque sur la figure 1 que le pilote 4 et le chef 5 du véhicule sont eux aussi équipés de dispositif d'observation 26 qui comportent des moyens d'observation à réalité augmentée 11, dispositifs identiques à ceux des fantassins 6 et 7.

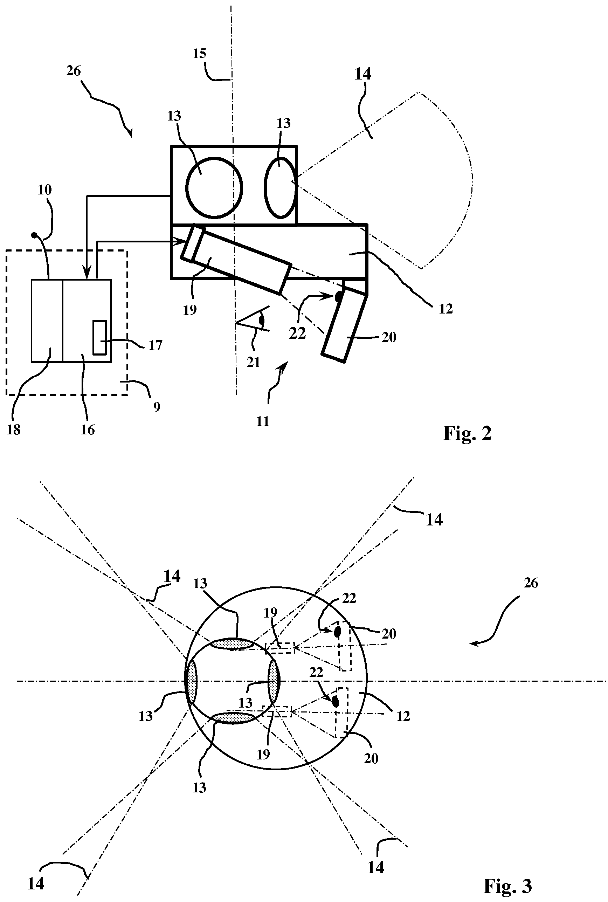

Les figures 2 et 3 montrent de façon plus détaillées la structure du dispositif d'observation 26 selon l'invention qui est solidaire du casque.

Sur ces figures, le casque n'est pas représenté mais on a repéré la platine 12 qui assure le support des moyens d'observation 11 et des caméras 13. Suivant l'exemple représenté, la platine 12 porte quatre caméras 13, régulièrement réparties angulairement autour d'un axe vertical 15, de façon à assurer un recouvrement sur 360° de leurs champs d'observation.

On a aussi schématisé sur la figure 2 le boîtier 9 renfermant le moyen de calcul 16 incorporant une mémoire 17, et le moyen de communication 18.

Pour simplifier l'exposé on a représenté sur les figures des moyens de calcul 16 logés dans un boîtier 9 porté par le fantassin. Il est bien entendu que les moyens de calculs pourraient être structurellement disposés ailleurs que dans un boîtier dédié 9, par exemple ils pourraient être portés par la platine 12 solidaire du casque (ainsi d'ailleurs que le moyen de communication 18). Ils pourraient même être incorporés aux circuits électroniques associés aux caméras 13. Ces moyens de calcul restent « portatifs » car ils sont dans tous les cas portés par l'utilisateur considéré.

Le moyen d'observation à réalité augmentée 11 comporte au moins un collimateur 19 de projection et au moins une lame semi transparente 20 qui sont solidaires de la platine 12.

D'une façon classique le collimateur 19 permet d'afficher une image sur la lame semi transparente 20 qui lui est associée.

Le dispositif d'observation 26 représenté ici comporte deux lames semi transparentes 20, une positionnée devant chaque œil 21 de l'utilisateur. Il comporte aussi deux collimateurs de projection 19, un devant chaque lame 20. Les lames 20 sont fixées de façon rigide par rapport à la platine 12 et il en est de même des collimateurs 19. Le recours à deux lames semi-transparentes permet d'assurer une vision stéréoscopique de l'espace et les images projetées par les deux collimateurs seront adaptées de façon à donner à l'utilisateur une image en relief.

D'une façon classique, chaque collimateur 19 permet donc d'afficher sur la lame semi transparente 20 qui lui est associée des informations qui sont fournies par le moyen de calcul 16 et qui viennent compléter la vision que l'utilisateur a de son espace ambiant.

En particulier, et conformément au procédé selon l'invention, les collimateurs 19 permettront de projeter sur les lames 20 une image qui est ici un réticule virtuel 22 qui permettra de localiser un objectif.

La platine 12 constitue un support mécanique rigide qui permet de fixer les positions et orientations angulaires relatives des caméras 13, des collimateurs 19 et des lames semi transparentes 20.

Cette platine 12 matérialise donc un repère d'orientation des moyens d'observation 11 de l'utilisateur dans l'espace, ou repère utilisateur (RU).

Il est bien entendu possible d'afficher sur les lames semi transparentes 20 d'autres images que celles d'un réticule virtuel, par exemple des images en relief et agrandies d'un objectif et qui sont envoyées par la plateforme, cela par exemple pour faciliter des opérations de reconnaissance du terrain, ou des informations associées à un élément ou objet présent sur le terrain.

Le but du procédé selon l'invention est de permettre de transmettre à un utilisateur, de façon dynamique et via les moyens de communication 18, une information de localisation d'un objectif (par exemple une cible) sans qu'il soit nécessaire de connaître précisément les coordonnées de la direction d'observation de l'utilisateur.

Pour cela et conformément à l'invention on va considérer une plateforme de référence, ici le véhicule 1, qui est positionnée sur le terrain et qui possède donc un repère d'orientation dans l'espace RM dénommé par la suite repère maître (voir la figure 1).

Par ailleurs, par conception du dispositif d'observation 26, et comme suite à la rigidité des liaisons entre les caméras 13 et les moyens d'observation 11 qui est assurée par la platine 12, on pourra définir pour un premier utilisateur (par exemple le fantassin 6) un premier repère d'orientation utilisateur dans l'espace ou premier repère utilisateur RU1. Ce premier repère utilisateur est associé au dispositif d'observation 26 du premier utilisateur 6 (voir la figure 1), donc aussi à son moyen d'observation 11.

La plateforme ou véhicule 1 est équipée d'au moins un moyen d'observation maître 23 qui est couplé à un moyen de désignation d'objectif (ici incorporé au moyen d'observation maître 23).

Les moyens de désignation d'objectifs sont bien connus de l'Homme du Métier. Ils comprennent généralement un télémètre, par exemple laser et des moyens de calcul de l'orientation d'une ligne de visée LV par rapport au repère maître RM. Ces moyens permettent de déterminer les coordonnées d'un objectif 24 dans le repère maître RM.

Ces coordonnées sont alors exploitables par tous les écrans de visualisation présents dans le véhicule 1 et il est possible de positionner un objectif visé sur ces écrans dont l'orientation est connue par rapport au véhicule 1.

Conformément à l'invention on transmet tout d'abord (étape A) au premier utilisateur 6, via les moyens de communication 18, les coordonnées de l'objectif 24 dans le repère maître RM. Bien entendu le véhicule est lui-même équipé de moyens de communication (par exemple utilisant les ondes hertziennes) qui lui permettent de transmettre ces coordonnées au premier utilisateur. On a schématisé figure 1 par le bloc 18a les moyens de communication du véhicule associés à une antenne 10a.

Parallèlement, et de façon permanente, la ou les caméras 13 portées par le premier utilisateur 6 permettent d'observer la plateforme 1 de référence.

Des algorithmes appropriés permettent de transformer les images de la plateforme de référence 1 en un modèle numérique instantané de cette plateforme (étape B).

On a mis par ailleurs dans la mémoire 17 du moyen de calcul 16 porté par le premier utilisateur un modèle numérique réel de la plateforme. Ce modèle numérique est issu de la conception assistée par ordinateur de la plateforme. C'est un modèle en trois dimensions qui n'est expurgé que des données de la plateforme qui ne sont pas visibles de l'utilisateur (formes cachées).

Ce modèle numérique incorpore bien sûr les éléments dimensionnels du véhicule réel, ce qui permettra de déterminer une distance entre l'utilisateur et le véhicule à partir de l'image d'un véhicule d'une taille donnée.

On procède donc (étape C) à une comparaison de la géométrie de la plateforme 1 ainsi observée (modèle numérique instantané) avec le modèle de référence qui a été mis dans une mémoire 17 du moyen de calcul portatif 16.

Cette comparaison permet, à l'aide d'algorithmes de comparaison, d'en déduire tout à la fois l'orientation des axes du premier repère utilisateur RU1 par rapport au repère maître RM (angles des axes) et la localisation du premier repère RU1 par rapport au repère maître RM (position du centre du premier repère RU1 dans le repère maître RM). Cette comparaison met en œuvre des algorithmes de comparaison d'image connus sous le nom d'algorithmes SLAM, acronyme de la dénomination anglo saxone : **S**imultaneous **L**ocalization **A**nd **M**apping (localisation et cartographie automatique). Ces algorithmes sont bien connus de l'Homme du Métier et il n'est pas nécessaire de les décrire en détails. On notera qu'ils procèdent à des comparaisons d'images en mettant en œuvre de techniques de filtrage (filtrage de Kalman, filtrage probalistique) afin de déterminer les modifications d'orientation des axes nécessaires pour obtenir la meilleure correllation. Il est ainsi possible à tout moment de déterminer les coordonnées du premier repère utilisateur RU1 dans le repère maître RM et il est aussi possible de connaître les orientations des axes du première repère utilisateur RU1 par rapport aux axes du repère maître RM.

Il est ensuite aisé (étape D) de calculer les coordonnées de l'objectif 24 dans le premier repère utilisateur RU1. Ce qui permet d'afficher sur le moyen d'observation à réalité augmentée 11 du premier utilisateur un réticule virtuel 22 permettant de localiser l'objectif 24.

Bien entendu, il sera nécessaire dans un premier temps de calibrer le moyen d'observation 11 du dispositif d'observation 26 aux caractéristiques morphologiques d'un utilisateur (écartement des yeux, distance des yeux aux lames semi réfléchissantes, distances entre les lames et les caméras). Le modèle numérique issu de la CAO est suffisamment précis pour assurer une robustesse de la localisation, même à partir d'une vision partielle de la plateforme 1 par l'utilisateur. Ce modèle permet par ailleurs de ne pas être perturbé par la présence d'obstacles entre l'utilisateur et la plateforme, obstacles masquant partiellement et temporairement la plateforme (par exemple d'autres utilisateurs interposés dans le champ de vision).

L'invention permet ainsi de s'affranchir complètement du recours à une plateforme inertielle solidaire de la platine 12. La précision de localisation est excellente puisque la précision des modèles numériques issus de la CAO permet de déterminer les coordonnées de la ligne de visée maître LV avec un écart angulaire inférieur à quelques milliradians.

L'invention permettant la localisation de tout utilisateur par rapport au véhicule 1, il est également possible de réaliser une désignation d'une cible 25 non plus à partir du véhicule 1 lui-même mais à partir d'un autre utilisateur, par exemple le fantassin 7 qui est lui aussi équipé d'un dispositif d'observation 26 selon l'invention, donc comportant un moyen d'observation 11 couplé à un moyen de calcul portatif 16 et associé à des moyens de communication 18. Ce second utilisateur 7 est équipé par ailleurs de moyens lui permettant de désigner un objectif par exemple un désignateur laser ou un moyen passif mettant en œuvre les procédés de triangulation.

Le second utilisateur 7 déterminera ainsi les coordonnées de sa propre ligne de visée LV2 d'un objectif 25 dans son propre repère utilisateur RU2.

Ce second utilisateur 7 connaît l'orientation et la localisation de son repère RU2 dans le repère maître RM car il observe en permanence le véhicule 1 à l'aide de ses caméras 13 et les algorithmes assurent, comme décrit précédemment par corrélation d'images, la localisation et l'orientation du repère RU2 par rapport au repère RM.

Le second utilisateur 7 va donc pouvoir transmettre au premier utilisateur 6 les coordonnées du nouvel objectif 25 dans le repère maître RM.

Le premier utilisateur 6 va ensuite mettre en œuvre le procédé selon l'invention pour calculer, comme décrit précédemment, les coordonnées du nouvel objectif 25 dans son propre repère RU1.

Dans tous les cas ce qui est essentiel c'est la possibilité pour chaque utilisateur d'observer le véhicule 1 à l'aide de ses caméras 13. Il peut ensuite se localiser dans l'espace et le repère maître RM sert de référence à tous les utilisateurs débarqués et répartis autour du véhicule. Les performances des systèmes optiques actuels permettent ainsi une localisation jusqu'à des distances de l'ordre de quelques dizaines de mètres du véhicule avec la précision de localisation souhaitée.

Selon une caractéristique de l'invention, il n'est pas nécessaire que l'utilisateur voie tout le véhicule. Il suffit qu'il ait dans son champ de vision une partie significative de celui ci pour que les algorithmes de SLAM puissent se mettre en œuvre.

Comme on l'a représenté à la figure 1, aussi bien le pilote 4 que le chef (ou le tireur) 5 sont également équipés de dispositifs d'observation 26 comportant des moyens d'observation à réalité augmentée 11 identiques à ceux des fantassins 6 et 7. Une telle disposition permet à un membre d'équipage de visualiser lui aussi sur ses moyens d'observation 11 la ou les cibles qui sont désignées par un utilisateur, et cela que le membre d'équipage soit dans l'habitacle (et observe le terrain au travers de ses voies optiques) ou bien la tête sortie.

Afin d'assurer une continuité des fonctions de désignation quelle que soit la position entrée ou sortie d'un utilisateur occupant le véhicule, on incorporera donc en mémoire non seulement un modèle numérique de la géométrie externe de la plateforme mais également un modèle numérique au moins partiel de la géométrie interne du véhicule. Le modèle de la géométrie interne se limitera pour l'essentiel à la géométrie interne de l'habitacle vue par l'opérateur, en exluant les parties du véhicule non accessibles à la vision, cela afin d'alléger le modèle numérique mis en mémoire.

## Revendications

1. Procédé d'aide à la localisation d'un objectif (24,25) pour un premier utilisateur (6) équipé d'un dispositif d'observation (26) comprenant un moyen d'observation (11) à réalité augmentée solidaire d'une platine support (12) et couplé à un moyen de calcul (16) et associé à des moyens de communication (18), procédé ***caractérisé en ce que,*** une plateforme (1) de référence étant positionnée sur le terrain et ayant un repère d'orientation dans l'espace dit repère maître (RM), et un premier repère d'orientation utilisateur (RU1) dans l'espace dit premier repère utilisateur étant défini par conception du dispositif d'observation, et associé au dispositif d'observation (26) du premier utilisateur (6), le procédé comprend les étapes suivantes :
- on transmet au premier utilisateur (6), à partir de la plateforme (1) ou par un second utilisateur (7) et via les moyens de communication (18) les coordonnées de l'objectif (24,25) dans le repère maître (RM) ;
- le premier utilisateur (6) observe la plateforme de référence (1) à partir d'au moins une caméra (13) qui est solidaire de la platine (12) portée par le premier utilisateur (6) et qui supporte le moyen d'observation à réalité augmentée (11) ;
- on compare la géométrie de plateforme (1) ainsi observée à un modèle numérique de la plateforme, qui a été mis dans une mémoire (17) du moyen de calcul (16), pour en déduire l'orientation et la localisation du premier repère utilisateur (RU1) par rapport au repère maître (RM) ;
- on calcule les coordonnées de l'objectif (24,25) dans le premier repère utilisateur (RU1) ;
- on affiche sur le moyen d'observation à réalité augmentée (11) du premier utilisateur (7) au moins un réticule virtuel (22) permettant de localiser l'objectif (24,25).

2. Procédé d'aide à la localisation d'un objectif selon la revendication 1, procédé dans lequel les coordonnées de l'objectif (24) dans le repère maître (RM) sont transmises à partir de la plateforme (1) qui est équipée d'au moins un moyen d'observation maître (23), couplé à un moyen de désignation d'objectif, moyens permettant de déterminer les coordonnées de l'objectif (24) dans le repère maître (RM).

3. Procédé d'aide à la localisation d'un objectif selon la revendication 1, procédé dans lequel les coordonnées de l'objectif (25) dans le repère maître sont transmises par un second utilisateur (7) qui est équipé d'un dispositif d'observation (26) couplé à un moyen de calcul (16) et associé à des moyens de communication (18), le second utilisateur ayant des moyens lui permettant de désigner un objectif.

4. Procédé d'aide à la localisation d'un objectif selon la revendication 3 et pour lequel le second utilisateur (7) est équipé d'un dispositif d'observation (26) comportant un moyen d'observation à réalité augmentée (11) analogue à celui du premier utilisateur, un second repère d'orientation utilisateur (RU2) dans l'espace dit second repère utilisateur étant défini par conception du dispositif d'observation (26), et qui est associé au dispositif d'observation (26) du second utilisateur (7), procédé dans lequel :
- le second utilisateur (7) détermine les coordonnées d'un objectif à désigner (25) dans le second repère utilisateur (RU2) ;
- le second utilisateur (7) observe la plateforme de référence (1) à partir d'au moins une caméra (13) portée par le second utilisateur (7), caméra qui est solidaire de la platine (12) portée par le second utilisateur (7) et qui supporte le moyen d'observation (11) à réalité augmentée du second utilisateur (7) ;
- on compare la géométrie de la plateforme (1) ainsi observée à un modèle numérique de la plateforme qui est mis dans une mémoire (17) du moyen de calcul (16) pour en déduire l'orientation et la localisation du second repère utilisateur (RU2) par rapport au repère maître (RM) ;
- on calcule les coordonnées de l'objectif à désigner (25) dans le repère maître (RM) ;
- le second utilisateur (7) transmet au premier utilisateur (6) les coordonnées de l'objectif (25) dans le repère maître (RM).

5. Procédé d'aide à la localisation d'un objectif selon une des revendications 1 à 4, **caractérisé en ce que** la plateforme (1) est constituée par un véhicule.

6. Procédé d'aide à la localisation d'un objectif selon la revendication 5, **caractérisé en ce que** le modèle numérique de la plateforme (1) est un modèle d'au moins une partie de la géométrie externe du véhicule.

7. Procédé d'aide à la localisation d'un objectif selon une des revendications 5 ou 6, **caractérisé en ce que** le modèle numérique de la plateforme (1) est ou incorpore un modèle d'au moins une partie de la géométrie interne du véhicule.

8. Dispositif d'observation (26) pour un premier utilisateur comportant un moyen d'observation à réalité augmentée (11) couplé à un moyen de calcul (16) associé à des moyens de communication (18), dispositif permettant la mise en œuvre du procédé selon les revendications précédentes, dispositif ***caractérisé en ce qu***'il comprend une platine (12) qui porte, fixée d'une façon rigide, au moins une caméra (13) permettant d'observer l'espace autour du premier utilisateur et d'acquérir des images de la plateforme (1), le moyen de calcul (16) incorporant une mémoire (17) dans laquelle est mis en place un modèle numérique de la plateforme (1) et des algorithmes permettant de déterminer l'orientation et la localisation, par rapport à un repère maître (RM) associé à ladite plateforme, d'un premier repère (RU1) d'orientation du dispositif d'observation (26) de l'utilisateur dans l'espace, dit premier repère utilisateur (RU1), et de convertir les coordonnées d'une image ou d'un objectif à partir du repère maître (RM) dans le premier repère (RU1) et inversement, le moyen d'observation à réalité augmentée (11) comportant au moins un collimateur de projection (19) et au moins une lame semi transparente (20) qui sont solidaires de la platine (12), chaque collimateur (19) pouvant afficher l'image sur une lame semi transparente (20), la platine (12) constituant un support mécanique rigide permettant de fixer les positions et orientations angulaires relatives de la ou des caméras (13), du ou des collimateurs (19) et de la ou des lames semi transparentes (20).

9. Dispositif d'observation selon la revendication 8, **caractérisé en ce qu'**il comprend deux lames semi transparentes (20) associées chacune à un collimateur (19).

## Patentansprüche

1. Verfahren zur Unterstützung der Lokalisierung eines Ziels (24, 25) für einen ersten Benutzer (6), der mit einer Beobachtungsvorrichtung (26) ausgestattet ist, umfassend ein Beobachtungsmittel (11) mit erweiterter Realität, das mit einer Halteplatte (12) fest verbunden und an ein Rechenmittel (16) gekoppelt und Kommunikationsmitteln (18) zugeordnet ist, wobei das Verfahren **dadurch gekennzeichnet ist, dass**, wobei eine Referenzplattform (1) vor Ort positioniert ist und einen Ausrichtungsbezug im Raum, bezeichnet als Masterbezug (RM), hat und ein erster Benutzer-Ausrichtungsbezug (RU1) im Raum, bezeichnet als erster Benutzerbezug, durch Konzeption der Beobachtungsvorrichtung definiert ist und der Beobachtungsvorrichtung (26) des ersten Benutzers (6) zugeordnet ist, das Verfahren die folgenden Schritte umfasst:
- Übertragen, an den ersten Benutzer (6), ab der Plattform (1), oder durch einen zweiten Benutzer (7) und über die Kommunikationsmittel (18), der Koordinaten des Ziels (24, 25) im Masterbezug (RM);
- Beobachten der Referenzplattform (1), durch den ersten Benutzer (6), ab mindestens einer Kamera (13), die mit der von dem ersten Benutzer (6) getragenen Platte (12) fest verbunden ist und die das Beobachtungsmittel mit erweiterter Realität (11) hält;
- Vergleichen der Geometrie der Plattform (1), die derart beobachtet wurde, mit einem digitalen Modell der Plattform, das in einem Speicher (17) des Rechenmittels (16) abgelegt wurde, um daraus die Ausrichtung und die Lokalisierung des ersten Benutzerbezugs (RU1) in Bezug auf den Masterbezug (RM) ableiten zu können;
- Berechnen der Koordinaten des Ziels (24, 25) im ersten Benutzerbezug (RU1);
- Anzeigen, auf dem Beobachtungsmittel mit erweiterter Realität (11) des ersten Benutzers (7), mindestens eines virtuellen Retikels (22), das erlaubt, das Ziel (24, 25) zu lokalisieren.

2. Verfahren zur Unterstützung der Lokalisierung eines Ziels nach Anspruch 1, wobei bei dem Verfahren die Koordinaten des Ziels (24) im Masterbezug (RM) ab der Plattform (1) übertragen werden, die mit mindestens einem Master-Beobachtungsmittel (23) ausgestattet ist, das an ein Zielmarkierungsmittel gekoppelt ist, wobei die Mittel erlauben, die Koordinaten des Ziels (24) im Masterbezug (RM) zu bestimmen.

3. Verfahren zur Unterstützung der Lokalisierung eines Ziels nach Anspruch 1, wobei bei dem Verfahren die Koordinaten des Ziels (25) im Masterbezug von einem zweiten Benutzer (7) übertragen werden, der mit einer Beobachtungsvorrichtung (26) ausgestattet ist, die an ein Rechenmittel (16) gekoppelt und Kommunikationsmitteln (18) zugeordnet ist, wobei der zweite Benutzer Mittel hat, die es ihm ermöglichen, ein Ziel zu markieren.

4. Verfahren zur Unterstützung der Lokalisierung eines Ziels nach Anspruch 3 und wofür der zweite Benutzer (7) mit einer Beobachtungsvorrichtung (26) ausgestattet ist, die ein Beobachtungsmittel mit erweiterter Realität (11) analog zu dem des ersten Benutzer aufweist, wobei ein zweiter Benutzer-Ausrichtungsbezug (RU2) im Raum, bezeichnet als zweiter Benutzerbezug, durch Konzeption der Beobachtungsvorrichtung (26) definiert ist, und der der Beobachtungsvorrichtung (26) des zweiten Benutzers (7) zugeordnet ist, wobei bei dem Verfahren:
- der zweite Benutzer (7) die Koordinaten eines zu markierenden Ziels (25) im zweiten Benutzerbezug (RU2) bestimmt;
- der zweite Benutzer (7) die Referenzplattform (1) ab mindestens einer Kamera (13) beobachtet, die von dem zweiten Benutzer (7) getragen wird, wobei die Kamera mit der Platte (12) fest verbunden ist, die von dem zweiten Benutzer (7) getragen wird und die die Beobachtungsmittel (11) mit erweiterter Realität des zweiten Benutzers (7) hält;
- Vergleichen der Geometrie der Plattform (1), die derart beobachtet wurde, mit einem digitalen Modell der Plattform, das in einem Speicher (17) des Rechenmittels (16) abgelegt ist, um daraus die Ausrichtung und die Lokalisierung des zweiten Benutzerbezugs (RU2) in Bezug auf den Masterbezug (RM) ableiten zu können;
- Berechnen der Koordinaten des zu markierenden Ziels (25) im Masterbezug (RM);
- Übertragen, durch den zweiten Benutzer (7) an den ersten Benutzer (6), der Koordinaten des Ziels (25) im Masterbezug (RM).

5. Verfahren zur Unterstützung der Lokalisierung eines Ziels nach einem der Ansprüche 1 bis 4, **dadurch gekennzeichnet, dass** die Plattform (1) von einem Fahrzeug gebildet ist.

6. Verfahren zur Unterstützung der Lokalisierung eines Ziels nach Anspruch 5, **dadurch gekennzeichnet, dass** das digitale Modell der Plattform (1) ein Modell von mindestens einem Teil der äußeren Geometrie des Fahrzeugs ist.

7. Verfahren zur Unterstützung der Lokalisierung eines Ziels nach einem der Ansprüche 5 oder 6, **dadurch gekennzeichnet, dass** das digitale Modell der Plattform (1) ein Modell mindestens eines Teils der inneren Geometrie des Fahrzeugs ist oder inkorporiert.

8. Beobachtungsvorrichtung (26) für einen ersten Benutzer, aufweisend ein Beobachtungsmittel mit erweiterter Realität (11), das an ein Rechenmittel (16) gekoppelt ist, das Kommunikationsmitteln (18) zugeordnet ist, wobei die Vorrichtung die Durchführung des Verfahrens nach einem der vorangehenden Ansprüche erlaubt, wobei die Vorrichtung **dadurch gekennzeichnet ist, dass** sie eine Platte (12) umfasst, die fest befestigt mindestens eine Kamera (13) trägt, die erlaubt, den Raum um den ersten Benutzer zu beobachten und Bilder von der Plattform (1) aufzunehmen, wobei das Rechenmittel (16) einen Speicher (17) inkorporiert, in welchem ein digitales Modell der Plattform (1) platziert ist und Algorithmen, die erlauben, die Ausrichtung und die Lokalisierung eines ersten Ausrichtungsbezugs (RU1) der Beobachtungsvorrichtung (26) des Benutzers im Raum, bezeichnet als erster Benutzerbezug (RU1), in Bezug auf einen Masterbezug (RM), der der Plattform zugeordnet ist, zu bestimmen, und die Koordinaten eines Bildes oder eines Ziels ab dem Masterbezug (RM) im ersten Bezug (RU1) umzuwandeln und umgekehrt, wobei das Beobachtungsmittel mit erweiterter Realität (11) mindestens einen Projektionskollimator (19) und mindestens ein halbtransparentes Plättchen (20) aufweist, die mit der Platte (12) fest verbunden sind, wobei jeder Kollimator (19) das Bild auf einem halbtransparenten Plättchen (20) anzeigen kann, wobei die Platte (12) einen festen mechanischen Halter bildet, der erlaubt, die relativen Positionen und Winkelausrichtungen der Kamera(s) (13), des oder der Kollimatoren (19) und des oder der halbtransparenten Plättchen (20) zu fixieren.

9. Beobachtungsvorrichtung nach Anspruch 8, **dadurch gekennzeichnet, dass** sie zwei halbtransparente Plättchen (20) umfasst, die jeweils einem Kollimator (19) zugeordnet sind.

## Claims

1. A method for assisting the location of a target (24,25) for a first user (6) equipped with an observation device (26) comprising an augmented reality observation means (11) secured to a support plate (12) and coupled to a computing means (16) and associated with communication means (18), the method being ***characterised in that,*** a reference platform (1) being positioned on the field and having a spatial orientation reference frame called master reference frame (RM), and a first user spatial orientation reference frame (RU1) called first user reference frame being defined by design of the observation device, and associated with the observation device (26) of the first user (6), the method comprises the following steps:
- sending the first user (6), from the platform (1) or by a second user (7) and via the communication means (18), the coordinates of the target (24,25) in the master reference frame (RM);
- observing, by the first user (6), the reference platform (1) from at least one camera (13) that is secured to the plate (12) carried by the first user (6) and that supports the augmented reality observation means (11);
- comparing the geometry of the platform (1) thus observed to a digital model of the platform, which has been placed in a memory (17) of the computing means (16), to deduce therefrom the orientation and the location of the first user reference frame (RU1) relative to the master reference frame (RM);
- computing the coordinates of the target (24,25) in the first user reference frame (RU1);
- displaying, on the augmented reality observation means (11) of the first user (7), at least one virtual reticle (22) making it possible to locate the target (24,25).

2. The method for assisting the location of a target according to claim 1, in which method the coordinates of the target (24) in the master reference frame (RM) are sent from the platform (1) that is equipped with at least one master observation means (23), coupled to a target designation means, the means making it possible to determine the coordinates of the target (24) in the master reference frame (RM).

3. The method for assisting the location of a target according to claim 1, in which method the coordinates of the target (25) in the master reference frame are sent by a second user (7) who is equipped with an observation device (26) coupled to a computing means (16) and associated with communication means (18), the second user having means allowing him to designate a target.

4. The method for assisting the location of a target according to claim 3 and for which the second user (7) is equipped with an observation device (26) including an augmented reality observation means (11) similar to that of the first user, a second user spatial orientation reference frame (RU2) called second user reference frame being defined by design of the observation device (26), and which is associated with the observation device (26) of the second user (7), in which method:
- the second user (7) determines the coordinates of a target to be designated (25) in the second user reference frame (RU2);
- the second user (7) observes the reference platform (1) from at least one camera (13) carried by the second user (7), the camera being secured to the plate (12) carried by the second user (7) and which supports the augmented reality observation means (11) of the second user (7);
- the geometry of the platform (1) thus observed is compared to a digital model of the platform that is placed in a memory (17) of the computing means (16) to deduce therefrom the orientation and the location of the second user reference frame (RU2) relative to the master reference frame (RM);
- the coordinates of the target to be designated (25) in the master reference frame (RM) are computed;
- the second user (7) sends the first user (6) the coordinates of the target (25) in the master reference frame (RM).

5. The method for assisting the location of a target according to one of claims 1 to 4, **characterised in that** the platform (1) is made up of a vehicle.

6. The method for assisting the location of a target according to claim 5, **characterised in that** the digital model of the platform (1) is a model of at least part of the external geometry of the vehicle.

7. The method for assisting the location of a target according to one of claims 5 or 6, **characterised in that** the digital model of the platform (1) is or incorporates at least part of a model of the internal geometry of the vehicle.

8. An observation device (26) for a first user, the device including an augmented reality observation means (11) coupled to a computing means (16) associated with communication means (18), the device making it possible to carry out the method according to the invention, the device being ***characterised in that*** it comprises a plate (12) that carries, rigidly fastened, at least one camera (13) making it possible to observe the space around the first user and to acquire images of the platform (1), the computing means (16) incorporating a memory (17) in which a digital model of the platform (1) is placed and algorithms making it possible to determine the orientation and the location, relative to a master reference frame (RM) associated with said platform, of a first spatial orientation reference frame (RU1) of the observation device (26) of the user, called first user reference frame (RU1), and to convert the coordinates of an image or a target from the master reference frame (RM) into the first reference frame (RU1) and vice versa, the augmented reality observation means (11) including at least one projection collimator (19) and at least one semitransparent blade (20) which are secured to the plate (12), wherein each collimator (19) can display the image on a semitransparent blade (20), the plate (12) constituting a rigid mechanical support making it possible to fix the relative positions and angular orientations of the camera(s) (13), the collimator(s) (19) and the semitransparent blade(s) (20).

9. The observation device according to claim 8, **characterised in that** it comprises two semitransparent blades (20) each associated with a collimator (19).
